Europäisches Patentamt

European Patent Office

Office européen des brevets

(11) Numéro de publication: **0 347 350**
**A1**

## DEMANDE DE BREVET EUROPEEN

(21) Numéro de dépôt: **89420216.7**

(22) Date de dépôt: **13.06.89**

(51) Int. Cl.⁴: **C 09 J 5/02**

(30) Priorité: **15.06.88 FR 8808476**

(43) Date de publication de la demande:
**20.12.89 Bulletin 89/51**

(84) Etats contractants désignés: **DE ES GB IT SE**

(71) Demandeur: **CEGEDUR PECHINEY RHENALU**
**23, rue Balzac**
**F-75008 Paris (FR)**

(72) Inventeur: **Rebreyend, Catherine**
**3, rue de la Monta**
**F-38120 St Egreve (FR)**

(74) Mandataire: **Vanlaer, Marcel et al**
**PECHINEY 28, rue de Bonnel**
**F-69433 Lyon Cédex 3 (FR)**

(54) **Procédé de collage du caoutchouc sur l'aluminium.**

(57) Cette invention concerne un procédé de collage du caoutchouc sur l'aluminium.

Ce procédé comprend les étapes suivantes : anodisation de la surface en aluminium en contact avec le caoutchouc, puis traitement de ladite surface par une solution de silane mercaptan dans un solvant organique, enfin séchage et application à chaud sur le caoutchouc.

L'invention trouve son application dans la réalisation de composites aluminium caoutchouc tels que ceux par exemple qui sont utilisés dans la confection d'ensembles pour glissières de portes de voitures.

Bundesdruckerei Berlin

## Description

## PROCEDE DE COLLAGE DU CAOUTCHOUC SUR L'ALUMINIUM

Cette invention est relative à un procédé de collage du caoutchouc sur l'aluminium.

Dans ce qui suit, on entend par aluminium l'élément lui-même avec ses impuretés habituelles ainsi que ses alliages et par caoutchouc le caoutchouc naturel, les caoutchoucs synthétiques vulcanisables et leurs mélanges. Ces produits peuvent se présenter sous forme de feuilles minces, bandes, plats, pièces moulées de toute épaisseur.

L'application de caoutchouc sur un substrat métallique tel que l'aluminium ou l'inverse est bien connue dans de nombreux secteurs de l'industrie. On l'utilise, par exemple, pour la réalisation de bandages de roues, de bandes d'insonorisation, d'isolateurs de vibrations, de revêtements de réservoirs ou de cylindres pour l'impression offset, de glissières de vitres de voitures, de blocs aimantés destinés à la fermeture de portes, etc...

L'intérêt d'une telle application vient du fait que le composite auquel elle aboutit possède à la fois les propriétés de résistance mécanique du métal et les propriétés élastiques et/ou d'inertie chimique du caoutchouc.

Toutefois, pour que le composite développe pleinement ces propriétés, il faut que ses composants adhèrent parfaitement l'un à l'autre et que cette adhérence se maintienne dans le temps, quelle que soit la sévérité des contraintes auxquelles il sera soumis lors de son utilisation, telles que forces importantes de traction, de compression, de cisaillement, température élevée, cycles thermiques rapides et de grande ampleur, milieux humides et corrosifs, etc... C'est là un des problèmes majeurs qui se pose aux fabricants de tels composites.

Certes, des solutions ont été proposées à ce jour. On peut citer, par exemple, l'utilisation d'un produit du commerce portant la marque "CHEMOSIL" sorte de laque qui est déposée à la surface de l'aluminium par pulvérisation puis cuite pendant 3 minutes à 200°C et 4 à 5 minutes à 160°C, opérations qui sont répétées pour donner un film de 5 μm d'épaisseur environ sur lequel est ensuite appliqué le caoutchouc. Outre son prix relativement élevé, ce produit a l'inconvénient d'émettre des vapeurs nocives lors de sa manipulation et de sa cuisson et de causer une gêne dans certains ateliers pour le personnel d'exploitation.

Consciente de ces inconvénients et soucieuse de trouver une solution simple au problème de collage du caoutchouc sur l'aluminium qui permette de maintenir inaltérée l'interface des composants quelle que soit la sévérité des contraintes auxquelles seront soumis les composites réalisés, la demanderesse a cherché et mis au point un procédé caractérisé en ce que la surface de l'aluminium destinée à être mise en contact avec le caoutchouc est anodisée en milieu sulfurique puis traitée par une solution de silane mercaptan dans un solvant organique puis séchée et appliquée à chaud sur le caoutchouc.

Ainsi, l'invention comporte une succession d'étapes au cours desquelles la surface en aluminium sur laquelle va être appliquée le caoutchouc est d'abord dégraissée chimiquement puis anodisée en milieu sulfurique sous courant continu dans des conditions qui sont bien connues de l'homme de l'art.

Ces conditions, dont certaines sont interdépendantes sont ajustées de manière à développer une couche d'oxyde d'épaisseur comprise de préférence entre 2 et 5 μm. La surface anodisée est ensuite soumise à l'action d'une solution de solvant organique contenant de préférence entre 1 et 5% en poids de silane mercaptan, cette action étant obtenue soit par pulvérisation de la solution sur la surface, soit par trempage de l'aluminium dans un bain formé par ladite solution.

Parmi les silanes mercaptans, on utilise de préférence ceux qui ont pour formule générale $HS(CH_2)_n\text{-}Si\text{-}(O\,R_1)_3$ où n est compris entre 2 et 5 et $R_1$ est un groupement alkyl possédant 1 à 4 atomes de carbone et plus particulièrement celui où $n = 3$ et $R_1$ correspond au radical methyl-$CH_3$.

En ce qui concerne le séchage, il est effectué à l'air vers 100°C durant le temps nécessaire pour faire évaporer complètement le solvant.

Puis sur la surface d'aluminium ainsi traitée, on applique le composant caoutchouc lequel est mis en oeuvre tel quel. Cette application est faite à une température comprise entre 200 et 250°C pendant au moins 2 minutes simplement en déposant le caoutchouc sur la couche anodisée, et sans aucune pression si ce n'est celle résultant du poids du caoutchouc luimême. Il est évident qu'une telle application peut également être réalisée par coextrusion lorsque le composite exige une telle technique pour sa mise en forme.

L'invention trouve son application dans la réalisation de tous les composites aluminium-caoutchouc et notamment de ceux qui constituent les ensembles pour glissières de portes de voitures.

Cette invention peut être illustrée à l'aide de l'exemple d'application suivant. On a réalisé des ensembles aluminium-caoutchouc pour glissières de vitres de voitures de la manière suivante : les pièces en aluminium du type 1050 suivant les normes de l'Aluminium Association ont été dégraissées puis décapées à la soude de manière à enlever une épaisseur de métal comprise entre 15 et 20 μm, puis elles ont été anodisées sous courant continu en milieu sulfurique à une température comprise entre 42 et 43°C, les autres conditions de durée et de densité de courant étant telles que l'epaisseur d'oxyde finale obtenue était voisine de 3 μm.

Lesdites pièces ont alors été trempées dans un bain de kérosène contenant 3% en poids de silane de composition $HS(CH_2)_3\,Si(OCH_3)_3$ de manière à former un film continu et mince puis sorties du bain et séchées pendant 10 minutes à 100°C. Le composant caoutchouc du type silicone a ensuite été appliqué sans pression et sans traitement particulier sur la surface d'aluminium ainsi obtenue pendant 3 minutes à 240°C.

Les pièces composites ainsi réalisées ont été soumises à différents tests:

1.Test de pelage après un maintien pendant 7 jours à 80°C : on a observé une rupture cohésive c'est-à-dire que le caoutchouc casse alors que l'interface aluminium-caoutchouc reste intacte.

2.Tests de durabilité : ils ont été effectués de trois façons différentes

. application de 2 cycles thermiques comportant les étapes suivantes: 4 heures à 100°C- 4 h à 38°C- 16 h à -40°C- 4 h à 38°C- 4 h à 100°C-16 h à -40°C.

. maintien dans un brouillard salin contenant 5% de NaCl en poids pendant 500 heures

. maintien pendant 72 h à 38°C dans de l'air ayant un taux d'humidité de 95%.

Dans tous les cas, l'adhérence du composite n'a pas été altérée, la rupture du composite étant toujours cohésive.

## Revendications

1. Procédé de collage du caoutchouc sur l'aluminium caractérisé en ce que la surface de l'aluminium destinée à être mise en contact avec le caoutchouc est anodisée en milieu sulfurique puis traitée par une solution de silane mercaptan dans un solvant organique puis séchée et appliquée à chaud sur le caoutchouc.

2. Procédé selon la revendication 1 caractérisé en ce que la surface d'aluminium est préalablement dégraissée puis décapée à la soude.

3. Procédé selon la revendication 1 caractérisé en ce que l'anodisation s'effectue dans des conditions électriques, de concentration d'acide, de température et de temps permettant de développer un film d'oxyde d'une épaisseur comprise entre 2 et 5 $\mu$m.

4. Procédé selon la revendication 1 caractérisé en ce que le silane mercaptan a pour formule générale HS $(CH_2)_n$- Si -$(OR_1)_3$ où n est égal à 2 ou 3 et $R_1$ est un groupement alkyl possédant 1 à 4 atomes de carbone.

5. Procédé selon la revendication 4 caractérisé en ce que le silane mercaptan a pour formule : HS$(CH_2)_3$ - Si - $(OCH_3)_3$.

6. Procédé selon la revendication 1 caractérisé en ce que la proportion de silane dans le solvant est comprise entre 1 et 5% en poids.

7. Procédé selon la revendication 1 caractérisé en ce que le traitement par la solution de silane s'effectue par pulvérisation de ladite solution sur la surface de l'aluminium.

8. procédé selon la revendication 1 caractérisé en ce que le traitement par la solution de silane s'effectue par trempage dans un bain de ladite solution.

9. Procédé selon la revendication 1 caractérisé en ce que le séchage s'effectue au voisinage de 100°C durant le temps nécessaire pour faire évaporer complètement le solvant.

10. Procédé selon la revendication 1 caractérisé en ce que l'application sur le caoutchouc s'effectue à une température comprise entre 200 et 250°C pendant au moins 2 minutes.

**Office européen des brevets**

**RAPPORT DE RECHERCHE EUROPEENNE**

Numero de la demande

EP 89 42 0216

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | US-A-4 059 473 (T. OKAMI)<br>--- | 1 | C 09 J 5/02 |
| A | US-A-4 247 354 (R.J. WARD)<br>----- | 1 | |

**DOMAINES TECHNIQUES RECHERCHES (Int. Cl.4)**

C 09 J
B 05 D

Le présent rapport a été établi pour toutes les revendications

| Lieu de la recherche | Date d'achèvement de la recherche | Examinateur |
|---|---|---|
| LA HAYE | 21-08-1989 | BUSCAGLIONE Y. |